# FASCICULE DE BREVET EUROPEEN

(11) **EP 0 875 683 B1**
(45) Date de publication et mention de la délivrance du brevet: **16.06.2004**
(21) Numéro de dépôt: 98401008.2
(22) Date de dépôt: 24.04.1998
(51) Int. Cl.: F16C 19/52

(54) **Palier à roulement à capteur d'informations**
Wälzlager mit Messwertgeber
Rolling contact bearing with an information sensor

(30) Priorité: 29.04.1997 FR 9705284
(43) Date de publication de la demande: 04.11.1998
(73) Titulaire: SKF FRANCE, F-92142 Clamart Cédex (FR)
(72) Inventeur: Message, Olivier, 37000 Tours (FR); Landrieve, Franck, 37230 Fondettes (FR)
(74) Mandataire: Casalonga, Axel

(56) Documents cités:
- EP-A- 0 320 322
- EP-A- 0 495 323
- EP-A- 0 511 105
- EP-A- 0 631 139
- US-A- 5 017 866

## Description

La présente invention concerne le domaine des paliers à roulement à capteurs d'informations du genre possédant une bague fixe et une bague tournante, une ou plusieurs rangées d'éléments tournants en contact avec des chemins de roulement aménagés sur lesdites bagues, un ensemble capteur solidarisé à la bague fixe et un moyen codeur solidarisé à la bague tournante et défilant en rotation devant le capteur avec un entrefer radial.

Un tel palier à roulement est connu du document US 5 017 866 A, qui décrit un palier à roulement correspondant au préambule de la revendication 1 comprenant un capteur monté sur un bras flexible d'un support. L'entrefer radial entre le codeur et le capteur est déterminé par deux ailes pourvue sur le bras flexible qui font saillie radialement vers l'intérieur et sont en appui sur une surface de référence d'un arbre tournant.

Le document EP 0 320 322 A décrit d'une part un palier à roulement comprenant un capteur monté de façon contigue sur une surface de référence de la bague fixe. Dans ce cas le capteur n'est pas pourvu d'un support.

D'autre part ce document décrit un palier à roulement correspondant au préambule de la revendication 1 comprenant un capteur monté sur un support qui fait saillie radialement vers l'intérieur sur une surface de référence de la bague fixe.

Ce type de palier à roulement est utilisé dans de nombreuses applications où il est nécessaire de disposer d'informations précises sur les paramètres de déplacement angulaire d'un élément mécanique, notamment la vitesse ou la position angulaire. Ces paliers à roulement peuvent être utilisés par exemple dans des moteurs électriques, des robots ou dans de nombreux organes tournants.

Un des problèmes à résoudre dans ce type de palier à roulement instrumenté, est la précision obtenue sur la valeur de l'entrefer radial existant entre le capteur et le codeur, la qualité et la fiabilité du signal obtenu dépendant de ce paramètre. La précision sur la valeur de l'entrefer dépend en particulier de la concentricité des bagues du palier à roulement, de la concentricité du codeur par rapport à la bague tournante, et de la position radiale du capteur par rapport à une surface de référence de la bague non tournante. La concentricité des bagues du palier à roulement est obtenue par construction, un palier à roulement étant un organe mécanique de précision. La concentricité du codeur par rapport à la bague tournante du palier à roulement ne pose pas de problème particulier dans la mesure où le codeur annulaire peut être emmanché sur une portée rectifiée de la bague tournante. La position radiale du capteur par rapport à une surface de référence de la bague non tournante du roulement, reste donc le paramètre déterminant pour la précision finale sur la valeur d'entrefer.

Dans les systèmes conventionnels, le composant électronique constituant le capteur est fixé dans un support, généralement en matière synthétique, pour former ainsi un bloc-capteur lui-même positionné sur la bague non tournante du palier à roulement instrumenté. Il en découle que la précision de l'entrefer entre le capteur et le codeur dépendra en grande partie de la précision avec laquelle on pourra positionner radialement le capteur par rapport à son support et le support par rapport à une surface de référence de la bague non tournante du palier à roulement. Il en résulte, d'une part, un coût de fabrication relativement élevé et, d'autre part, des risques supplémentaires de dispersion de la valeur finale de l'entrefer résultant entre le capteur et le codeur.

L'invention a pour objet de remédier aux inconvénients des dispositifs ci-dessus et de proposer un palier à roulement permettant de s'affranchir du problème du positionnement radial du capteur par rapport à son support.

Le palier à roulement, selon l'invention, comprend une bague fixe, une bague tournante, au moins une rangée d'éléments roulants disposée entre la bague fixe et la bague tournante, un moyen codeur solidaire de la bague tournante et concentrique à celle-ci et un moyen capteur pourvu d'un support, solidaire de la bague fixe et disposé en regard et avec un faible entrefer par rapport au moyen codeur dont le défilement lors de la rotation est détecté par le moyen capteur. Le moyen capteur est en appui direct sur une surface de référence de la bague fixe.

On supprime ainsi la dispersion de la valeur de l'entrefer due au positionnement du capteur par rapport à son support et du support par rapport à la bague fixe.

Avantageusement, on prévoit que le support exerce un effort permanent sur le moyen capteur en direction de la surface de référence. Cet effort évite un éventuel déplacement intempestif du moyen capteur.

Dans un mode de réalisation de l'invention, le moyen capteur comprend au moins un capteur magnétosensible, par exemple à effet Hall, ou optique, et le moyen codeur comprend un anneau magnétisé multipolaire.

Dans un mode de réalisation de l'invention, le moyen capteur comprenant au moins un capteur, chaque capteur est pourvu d'un boîtier comprenant une face de référence en contact avec ladite surface de référence de la bague fixe, et un face de détection opposée à la face de référence et disposée en regard du moyen codeur.

De préférence, le boîtier comprend deux surfaces obliques formant chanfrein se raccordant de chaque côté de la face de détection. Le support de capteur peut être annulaire et pourvu d'au moins un logement prévu pour recevoir un capteur, chaque logement comprenant une encoche dont les bords forment des surfaces de positionnement du capteur par rapport au support. Avantageusement, les bords du logement sont disposés de façon convergeante vers l'intérieur du palier, et en contact avec les surfaces obliques du boîtier.

Dans un mode de réalisation de l'invention, le support comprend au moins un perçage pour des broches de connexion du moyen capteur.

Avantageusement, le support comprend un corps principal et un élément de retenue annulaires, le corps principal étant en contact avec la face frontale d'extrémité de la prolongation et l'élément de retenue étant en contact avec l'alésage de ladite prolongation.

Dans un mode de réalisation de l'invention, la face de référence du boîtier est en saillie radialement par rapport à la périphérie du support.

Dans un mode de réalisation de l'invention, le support est pourvu de deux rainures axiales capables de coopérer avec des faces complémentaires de la bague fixe.

On obtient ainsi un ou plusieurs capteurs dont la position spatiale est déterminée directement par leur contact avec la surface de référence de la bague fixe, ce qui réduit considérablement les possibilités de dispersion de la valeur de l'entrefer entre le capteur et le codeur.

L'invention sera mieux comprise à l'étude de la description détaillée de quelques modes de réalisation pris à titre d'exemples nullement limitatifs et illustrés par les dessins annexés, sur lesquels :

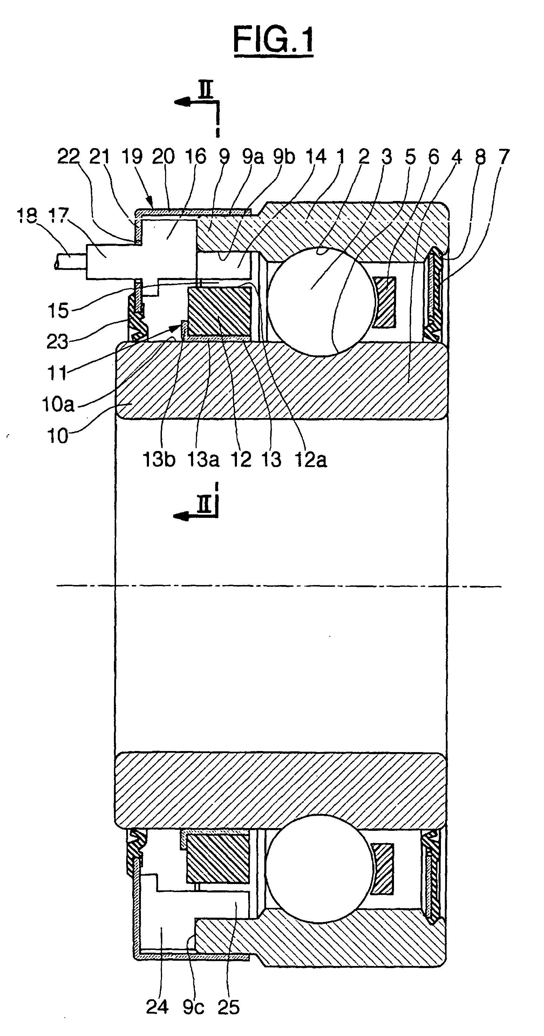

la figure 1 est une vue en coupe axiale d'un palier à roulement selon l'invention;
la figure 2 est une vue en coupe selon II-II de la figure 1;
la figure 3 est une vue de côté en élévation d'un support de capteur;
la figure 4 est une vue de dessus en élévation correspondant à la figure 3;
la figure 5 est une vue de face en élévation d'un support de capteur équipé d'un capteur;
la figure 6 est une vue en perspective d'un capteur;
la figure 7 est une vue en coupe axiale d'un palier à roulement selon un autre mode de réalisation de l'invention;
la figure 8 est une vue de dessus en élévation d'un palier à roulement selon un autre mode de réalisation de l'invention;
la figure 9 est une vue en coupe selon IX-IX de la figure 8;
la figure 10 est une vue partielle de face en élévation du palier à roulement de la figure 8;
la figure 11 est une vue de côté en élévation d'un support de capteur; et
la figure 12 est une vue de dessus en élévation du support de capteur de la figure 11.

Comme on peut le voir sur les figures, le palier à roulement comprend une bague extérieure 1 comprenant sur son alésage un chemin de roulement 2 pour des éléments roulants 3, par exemple des billes, et une bague intérieure 4 pourvue d'un chemin de roulement 5 pour les éléments roulants 3. Les éléments roulants 3 sont maintenus circonférentiellement espacés par une cage 6. Un joint d'étanchéité 7 est prévu sur un des côtés du palier à roulement et solidarisé à la bague extérieure 1 au moyen d'une rainure 8 disposée axialement entre le chemin de roulement 2 et une face radiale de la bague extérieure 1.

Du côté opposé au joint d'étanchéité 7, la bague extérieure 1 comprend une prolongation axiale 9 dont la périphérie 9a est de diamètre inférieur à celui de la périphérie de la bague extérieure 1 et dont l'alésage 9b est supérieur à l'alésage de la bague extérieure 1. La prolongation axiale 9 se termine par une surface frontale radiale 9c. La bague intérieure 4 comprend également une prolongation axiale 10 disposée du même côté que la prolongation axiale 9, d'alésage identique à celui de la bague intérieure 4 et pourvu d'une portée rectifiée 10a sur sa surface extérieure.

Un codeur 11 est pourvu d'une partie active 12 réalisée par exemple en matériau synthétique chargé de particules magnétiques, et d'un support en tôle 13 sur lequel est surmoulée la partie active 12 et comprenant une partie cylindrique 13a d'emmanchement et un rebord radial 13b. La partie active 12 comprend une surface extérieure cylindrique 12a.

Un capteur 14 est monté, solidaire de la bague extérieure 1, en regard et à faible distance de la surface cylindrique 12a de la partie active 12 du codeur 11 pour définir un entrefer radial 15. Le capteur 14 est supporté par un support 16 comprenant une sortie de connexion 17 dans laquelle est monté un câble 18 permettant de communiquer les informations en provenance du capteur, aux organes destinés à les recevoir.

Le support de capteur 16 est entouré par un couvercle 19, en tôle, pourvu d'une portion cylindrique 20 dont une extrémité est emmanchée sur la périphérie 9a de la prolongation 9 de la bague extérieure 1, et d'une portion radiale 21 prévue avec un perçage 22 laissant passer la sortie de connexion 17. L'extrémité libre de la portion radiale 22 supporte un joint d'étanchéité 23 qui vient en contact de frottement avec la portée cylindrique 10a de la prolongation 10 de la bague intérieure 4. Le couvercle 19 définit avec les bagues extérieure 1 et intérieure 4 et les éléments roulants 3, un espace clos, protégé des pollutions extérieures, dans lequel sont disposés le codeur 11 et le capteur 14.

Le support 16 du capteur 14 comprend un corps principal 24 axialement disposé entre la portion radiale 21 du couvercle 19 et la surface frontale 9c de la prolongation 9, et un élément de retenue 25 disposé axialement entre le corps principal 24 et les éléments roulants 3, autour du codeur 11. Le corps principal 24 et l'élément de retenue 25 sont annulaires, à ceci près que l'élément de retenue 25 est pourvu d'un logement de réception 26 pour un capteur 14. Le logement 26 est pourvu de bords obliques 27.

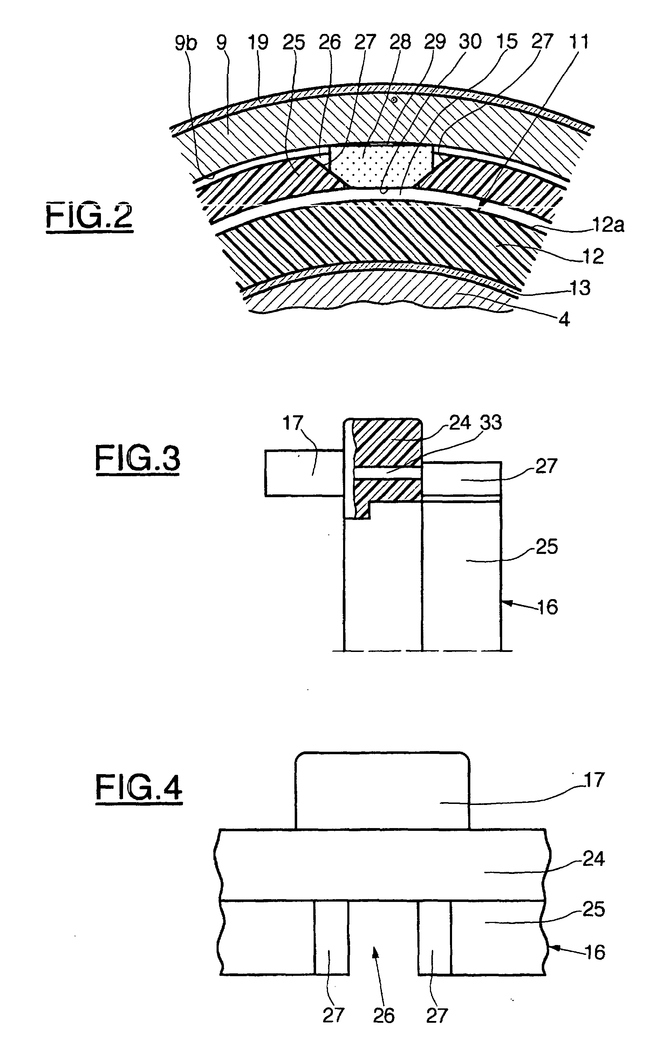

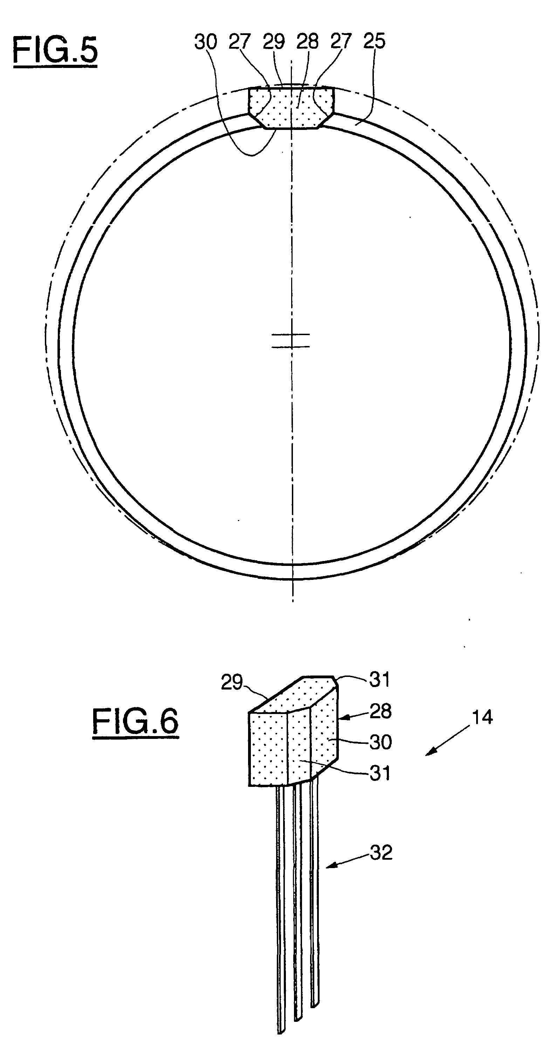

Comme on le voit plus particulièrement sur la figure 6, le capteur 14 se présente sous la forme d'un composant possédant un boîtier 28 prévu avec une face de référence 29, une face de détection 30 opposée à la face de référence 29, deux chanfreins 31 disposés de part et d'autre de la face de détection 30, et des broches 32 issues d'une autre face du boîtier 28. Le capteur 14 est disposé sur le support 16 par un mouvement axial. On enfile les broches 32 dans un passage 33 (figure 3) prévu à cet effet et traversant le corps principal 24. A la fin du mouvement axial, on vient disposer le boîtier 28 dans le logement 26, les chanfreins 31 de la face de détection 30 venant coopérer avec les surfaces obliques 27, jusqu'à ce que le boîtier 28 vienne en butée contre le corps principal 24. Le capteur est alors solidarisé avec le support dans cette position, par exemple au moyen d'une résine introduite dans la zone de sortie de connexion 17. Le boîtier 28 se trouve alors dans la position illustrée sur les figures 2 et 5. La face de référence 29 du boîtier 28 est orientée à l'extérieur pour venir en contact par ses bords avec l'alésage 9b de la prolongation 9 qui sert de surface de référence.

Pour garantir le contact entre le boîtier 28 et l'alésage 9b de la prolongation 9, on prévoit que la face de référence 29 fasse légèrement saillie radialement vers l'extérieur par rapport à la périphérie de l'élément de retenue 25. Le support 16 du capteur 14 est réalisé en un matériau présentant une certaine souplesse. Le support 16 est prévu pour pouvoir s'introduire avec seulement un très léger jeu dans l'alésage 9b. Ainsi, on peut prévoir que le cercle circonscrit à l'ensemble élément de retenue 25 et boîtier 28 est d'un diamètre légèrement supérieur à l'alésage 9b de la prolongation 9 (figure 5). Ainsi, après le montage du support 16 sur la bague extérieure 1, ledit support exercera par élasticité un effort radial sur le boîtier 28 par l'intermédiaire des surfaces obliques 27 de l'élément de retenue 25, ledit effort radial maintenant en permanence le boîtier 28 en appui contre l'alésage de référence 9b. Le capteur 14 est ainsi mis directement en contact avec une surface de référence de la bague extérieure 1 dont la distance radiale par rapport au codeur est précise et maîtrisée.

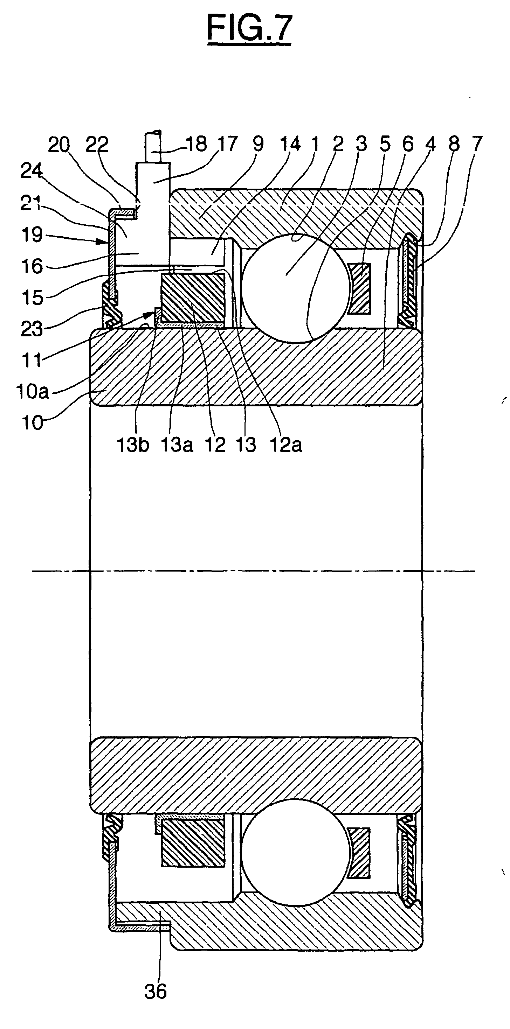

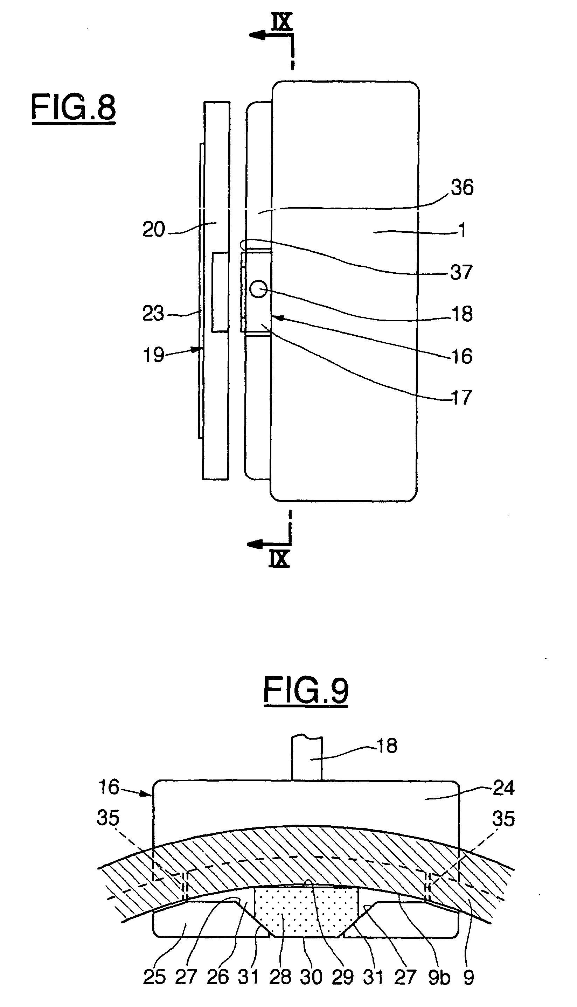

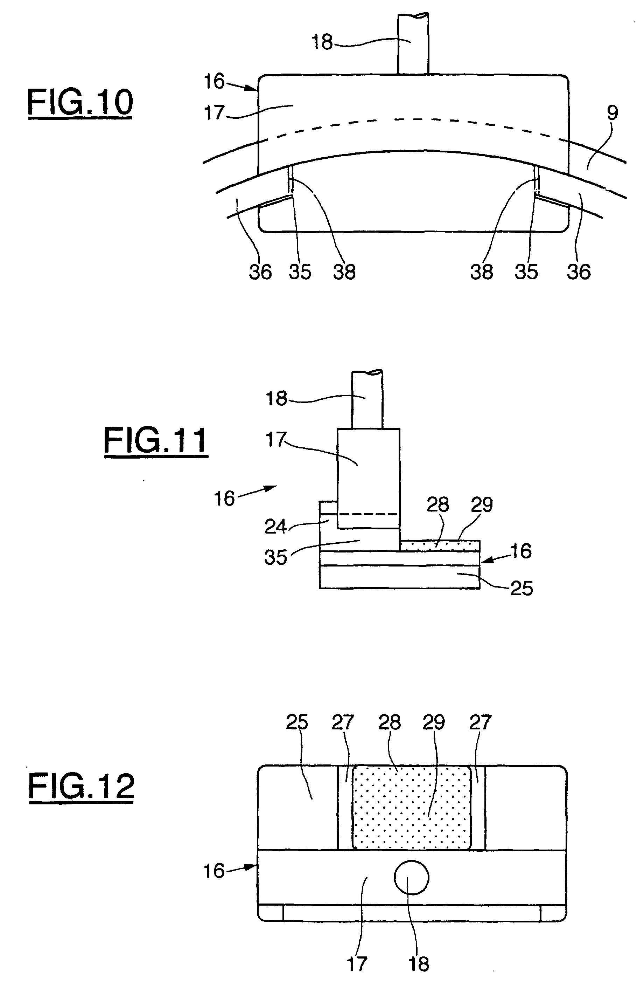

Dans le mode de réalisation illustré sur les figures 7 à 12, le support 16 du capteur 14 est du type à glissière, comprenant deux rainures axiales 35 prévues dans le corps principal 24, sur chaque bord de celui-ci et radialement au niveau de la surface extérieure de l'élément de retenue 25. La bague extérieure 1 est pourvue d'une extension supplémentaire 36 axiale et s'étendant au-delà de la prolongation 9. L'extension supplémentaire 36 est annulaire, seulement interrompue par une encoche 37 pourvue de bords parallèles 38 qui viennent coopérer avec les rainures 35 du support 16. On assure ainsi la solidarisation du support 16 et de la bague extérieure 1. La sortie de connexion 17 est ici radiale, ce qui permet de diminuer l'encombrement axial du palier à roulement. L'extension supplémentaire 36 de la bague extérieure 1 peut être issue de cette dernière et usinée, ou au contraire rapportée, par exemple par soudure.

Les différents éléments sont dimensionnés de telle sorte qu'après la mise en place du support 16 sur la bague extérieure, le boîtier 28 du capteur soit pincé élastiquement entre les surfaces obliques 27 de l'élément de retenue 25 et l'alésage 9b de la bague extérieure, garantissant ainsi un entrefer rigoureux entre capteur et codeur.

Les modes de réalisation qui viennent d'être décrits ne sont pas limitatifs. On peut notamment prévoir un palier à roulement équipé de plusieurs capteurs avec un support pourvu d'un nombre de logements correspondant. On pourrait ainsi déterminer le sens de rotation et/ou la position angulaire d'une bague par rapport à l'autre. Le palier à roulement peut également être prévu avec une bague extérieure tournante et une bague intérieure non tournante. On peut aussi prévoir un capteur dont le boîtier soit dépourvu de chanfrein.

Grâce à l'invention, on obtient, à faible coût, un positionnement radial parfait du capteur par rapport à une surface de référence de la bague fixe et on maîtrise ainsi la valeur de l'entrefer entre le capteur et le codeur.

## Revendications

1. Palier à roulement comprenant une bague fixe (1), une bague tournante (4), au moins une rangée d'éléments roulants (3) disposés entre la bague fixe et la bague tournante, un moyen codeur (11) solidaire de la bague tournante et concentrique à celle-ci et un moyen capteur pourvu d'un support (16), solidaire de la bague fixe et disposé en regard et avec un faible entrefer (15) par rapport au moyen codeur dont le défilement lors de la rotation est détecté par le moyen capteur, **caractérisé par le fait que** le moyen capteur est en appui direct sur une surface de référence (9b) de la bague fixe.

2. Palier à roulement selon la revendication 1, **caractérisé par le fait que** ledit support exerce un effort permanent sur le moyen capteur en direction de la surface de référence.

3. Palier à roulement selon la revendication 1 ou 2, **caractérisé par le fait que** le moyen capteur comprend au moins un capteur (14) magnétosensible ou optique et le moyen codeur comprend un anneau magnétisé multipolaire.

4. Palier à roulement selon l'une quelconque des revendications précédentes, **caractérisé par le fait que**, le moyen capteur comprenant au moins un capteur, chaque capteur (14) est pourvu d'un boîtier (28) comprenant une face dé référence (29) en contact avec ladite surface de référence, et une face de détection (30) opposée à la face de référence et disposée en regard du moyen codeur.

5. Palier à roulement selon la revendication 4, **caractérisé par le fait que** le boîtier comprend deux surfaces obliques (31) formant chanfrein se raccordant de chaque côté de la face de détection.

6. Palier à roulement selon la revendication 5, **caractérisé par le fait que** le support est annulaire et pourvu d'au moins un logement (26) prévu pour recevoir un capteur, chaque logement comprenant une encoche dont les bords (27) forment des surfaces de positionnement du capteur par rapport au support.

7. Palier à roulement selon la revendication 6, **caractérisé par le fait que** les bords du logement sont disposés de façon convergeante vers l'intérieur du palier, et en contact avec les surfaces obliques du boîtier.

8. Palier à roulement selon l'une quelconque des revendications 4 à 7, **caractérisé par le fait que** le support comprend au moins un perçage (33) pour des broches de connexion du moyen capteur.

9. Palier à roulement selon l'une quelconque des revendications précédentes, **caractérisé par le fait que** le support comprend un corps principal et un élément de retenue annulaires, le corps principal étant en contact avec la face frontale d'extrémité de la prolongation et l'élément de retenue étant en contact avec l'alésage de ladite prolongation.

10. Palier à roulement selon l'une quelconque des revendications précédentes, **caractérisé par le fait que** la face de référence du boîtier est en saillie radialement par rapport à la périphérie du support.

11. Palier à roulement selon l'une quelconque des revendications 1 à 8, **caractérisé par le fait que** le support est pourvu de deux rainures axiales (35) capables de coopérer avec des surfaces complémentaires de la bague fixe.

## Patentansprüche

1. Wälzlager mit einem stillstehenden Ring (1), einem umlaufenden Ring (4), wenigstens einer Reihe von Wälzkörpern (3), die zwischen dem stillstehenden Ring und dem umlaufenden Ring angeordnet sind, einem Signalgebermittel (11), das mit dem umlaufenden Ring fest verbunden und konzentrisch zu diesem angeordnet ist, und einem Signalaufnehmermittel, das mit einem Träger (16) versehen, mit dem stillstehenden Ring fest verbunden und in Bezug auf das Signalgebermittel diesem gegenüber und mit geringem Abstand (15) zu diesem angeordnet ist, wobei das Vorbeilaufen des Signalgebermittels während der Rotation durch das Signalaufnehmermittel erfasst wird, **dadurch gekennzeichnet, dass** das Signalaufnehmermittel mit einer Referenzfläche (9b) des stillstehenden Ringes in Anlage steht.

2. Wälzlager nach Anspruch 1, **dadurch gekennzeichnet, dass** der Träger auf das Signalaufnehmermittel eine beständige Kraft in Richtung auf die Referenzfläche ausübt.

3. Wälzlager nach Anspruch 1 oder 2, **dadurch gekennzeichnet, dass** das Signalaufnehmermittel wenigstens einen magnetisch beeinflussbaren oder optischen Signalaufnehmer (14) aufweist und dass das Signalgebermittel einen mehrpolig magnetisierten Ring aufweist.

4. Wälzlager nach einem der vorhergehenden Ansprüche, **dadurch gekennzeichnet, dass** das Signalaufnehmermittel wenigstens einen Signalaufnehmer aufweist, wobei jeder Signalaufnehmer (14) mit einem Gehäuse (28) versehen ist, das eine mit der Referenzfläche in Berührung stehende Bezugsseite (29) und eine Erfassungsseite (30) aufweist, die zu der Bezugsseite entgegengesetzt gerichtet ist und dem Signalgeber gegenüber liegt.

5. Wälzlager nach Anspruch 4, **dadurch gekennzeichnet, dass** das Gehäuse zwei geneigte Flächen (31) aufweist, die eine sich an jede Kante der Erfassungsseite anschließende Abschrägung bilden.

6. Wälzlager nach Anspruch 5, **dadurch gekennzeichnet, dass** der Träger ringförmig ausgebildet und mit wenigstens einem Sitz (26) versehen ist, der zur Aufnahme eines Signalaufnehmers vorgesehen ist, wobei jeder Sitz einen Einschnitt aufweist, dessen Ränder (27) Flächen zur Positionierung des Aufnehmers in Bezug auf den Träger bilden.

7. Wälzlager nach Anspruch 6, **dadurch gekennzeichnet, dass** die Ränder des Sitzes derart angeordnet sind, dass sie in Richtung des Innenraums des Lagers zusammen laufen, und mit den geneigten Flächen des Gehäuses in Berührung stehen.

8. Wälzlager nach einem der Ansprüche 4 bis 7, **dadurch gekennzeichnet, dass** der Träger wenigstens ein Durchgangsmittel (33) für Anschlussstifte des Signalaufnehmermittels aufweist.

9. Wälzlager nach einem der vorhergehenden Ansprüche, **dadurch gekennzeichnet, dass** der Träger einen Grundkörper und ein Halteelement aufweist, die ringförmig ausgebildet sind, wobei der Grundkörper mit der äußeren Stirnseite des Fortsatzes in Berührung steht und das Haltemittel die Bohrungswand des Fortsatzes berührt.

10. Wälzlager nach einem der vorhergehenden Ansprüche, **dadurch gekennzeichnet, dass** die Bezugsseite des Gehäuses in Bezug auf die Umfangsseite des Trägers radial vorsteht.

11. Wälzlager nach einem der Ansprüche 1 bis 8, **dadurch gekennzeichnet, dass** der Träger mit zwei axialen Nuten (35) versehen ist, die geeignet sind, um mit komplementären Flächen des stillstehenden Ringes zusammen zu wirken.

## Claims

1. Rolling bearing comprising a stationary race (1), a rotating race (4), at least one row of rolling elements (3) placed between the stationary race and the rotating race, an encoder means (11) secured to the rotating race and concentric therewith and a sensor means provided with a support (16), secured to the stationary race and arranged facing and a small gap (15) away from the encoder means the travel of which, during rotation, is detected by the sensor means, **characterized in that** the sensor means bears directly on a reference surface (9b) of the stationary race.

2. Rolling bearing according to Claim 1, **characterized in that** the said support exerts a continuous load on the sensor means in the direction of the reference surface.

3. Rolling bearing according to Claim 1 or 2, **characterized in that** the sensor means comprises at least one magnetosensitive or optical sensor (14) and the encoder means comprises a multipole magnetized ring.

4. Rolling bearing according to any one of the preceding claims, **characterized in that**, the sensor means comprising at least one sensor, each sensor (14) is provided with a housing (28) comprising a reference face (29) in contact with the said reference surface, and a detection face (30) opposite the reference face and arranged facing the encoder means.

5. Rolling bearing according to Claim 4, **characterized in that** the housing comprises two chamfer-forming oblique surfaces (31) linking up with each side of the detection face.

6. Rolling bearing according to Claim 5, **characterized in that** the support is annular and provided with at least one recess (26) designed to accommodate a sensor, each recess comprising a notch whose edges (27) form surfaces for positioning the sensor with respect to the support.

7. Rolling bearing according to Claim 6, **characterized in that** the edges of the recess are arranged converging towards the inside of the bearing, and in contact with the oblique surfaces of the housing.

8. Rolling bearing according to any one of Claims 4 to 7, **characterized in that** the support comprises at least one drilling (33) for connection pins of the sensor means.

9. Rolling bearing according to any one of the preceding claims, **characterized in that** the support comprises an annular main body and an annular retaining element, the main body being in contact with the front end face of the extension and the retaining element being in contact with the bore of the said extension.

10. Rolling bearing according to any one of the preceding claims, **characterized in that** the reference face of the housing projects radially with respect to the periphery of the support.

11. Rolling bearing according to any one of Claims 1 to 8, **characterized in that** the support is provided with two axial grooves (35) capable of co-operating with complementary surfaces of the stationary race.
